# DEMANDE DE BREVET EUROPEEN

(11) **EP 4 086 556 A1**
(43) Date de publication de la demande: **09.11.2022**
(21) Numéro de dépôt: 22170839.9
(22) Date de dépôt: 29.04.2022
(51) Int. Cl.: F28D 9/00, F28F 3/02, F28F 9/02

(54) **MODULE D'ÉCHANGEUR DE CHALEUR À PLAQUES À CANAUX INTÉGRANT AU MOINS UNE ZONE D'ALIMENTATION ET DE DISTRIBUTION DE FLUIDE FORMÉE PAR DES PLOTS**

(30) Priorité: 06.05.2021 FR 2104813
(71) Demandeur: Commissariat à l'Energie Atomique et aux Energies Alternatives, 75015 Paris (FR)
(72) Inventeur: JEANNINGROS, Xavier, 04860 PIERREVERT (FR); GROSSE, Julien, 74540 MÛRES (FR); SERRE, Julien, 83560 GINASSERVIS (FR); VINCENT, Sébastien, 83560 VINON SUR VERDON (FR); CACHON, Lionel, 04100 MANOSQUE (FR)
(74) Mandataire: Nony

(57) **Abrégé**

Module d'échangeur de chaleur à plaques à canaux intégrant au moins une zone d'alimentation et de distribution de fluide formée par des plots.

L'invention concerne un module (1, l') d'échangeur de chaleur à au moins deux circuits de fluides, d'axe longitudinal (X) comprenant un empilement de plaques (10, 20 ; 10', 20') définissant au moins deux circuits de fluide, au moins une partie des plaques comprenant chacune des canaux de circulation de fluide, les canaux d'au moins l'un des deux circuits, dit premier circuit, présentant:
- au moins une zone d'alimentation et de distribution (Z_{H}) du fluide depuis l'extérieur de l'empilement, formant un pré-collecteur du fluide, dans laquelle les canaux (13) sont délimités par des plots (14, 14') répartis sur la surface de plaque;
- une zone d'échange (Z_{E}) continue avec le pré-collecteur dans laquelle les canaux sont délimités chacun par une rainure (15) séparés entre eux par une nervure (16) et s'étendent le long de l'axe longitudinal (X).

## Description

### Domaine technique

La présente invention concerne un module d'échangeur de chaleur à empilement de plaques métalliques, intégrant au moins deux circuits de fluides.

L'invention a trait plus particulièrement à la réalisation d'un nouveau type de module d'échangeur de chaleur pour améliorer l'uniformité de la distribution des différents canaux de circulation interne de fluides, tout en assurant à la fois une bonne efficacité thermique et un chargement thermomécanique satisfaisant, et ce sans nuire à la compacité du module.

Les échangeurs de chaleur connus comprennent soit au moins deux circuits à canaux de circulation interne de fluide. Dans les échangeurs à un seul circuit, les échanges thermiques se réalisent entre le circuit et un fluide environnant dans lequel il baigne. Dans les échangeurs à au moins deux circuits de fluide, les échanges thermiques se réalisent entre les deux circuits de fluide.

Il est connu des réacteurs chimiques qui mettent en œuvre un procédé en continu selon lequel on injecte simultanément une quantité faible de co-réactants, à l'entrée d'un premier circuit de fluide, de préférence équipé d'un mélangeur, et on récupère le produit chimique obtenu en sortie dudit premier circuit. Parmi ces réacteurs chimiques connus, certains comprennent un deuxième circuit de fluide, appelé usuellement utilité, et dont la fonction est de contrôler thermiquement la réaction chimique, soit en apportant la chaleur nécessaire à la réaction, soit au contraire en évacuant la chaleur dégagée par celle-ci. De tels réacteurs chimiques à deux circuits de fluide avec utilité sont usuellement appelés échangeurs-réacteurs.

La présente invention concerne aussi bien la réalisation de modules d'échangeurs de chaleur à fonction uniquement d'échanges thermiques et intégrant deux circuits de fluide que la réalisation d'échangeurs-réacteurs. Aussi, par « module d'échangeur de chaleur à au moins deux circuits de fluide », il faut comprendre dans le cadre de l'invention, aussi bien un module d'échangeur de chaleur à fonction uniquement d'échanges thermiques qu'un échangeur-réacteur.

L'utilisation principale d'un module d'échangeur entre deux fluides selon l'invention est son utilisation avec un gaz comme un des deux fluides. Il peut s'agir avantageusement de métal liquide et de gaz, par exemple du sodium liquide et d'azote.

L'application principale visée par un module d'échangeur selon l'invention est l'échange de chaleur entre un métal liquide, tel que sodium liquide, de la boucle secondaire et de l'azote en tant que gaz de la boucle tertiaire d'un réacteur à neutrons rapides refroidi avec le métal liquide, tel que le sodium liquide dit RNR-Na ou SFR (acronyme anglais de « Sodium Fast Reactor ») et qui fait partie de la famille des réacteurs dits de quatrième génération.

Un module d'échangeur de chaleur selon l'invention peut aussi être mis en œuvre dans toute autre application nécessitant un échange entre deux fluides, tels qu'un liquide et un gaz, de préférence lorsqu'il est nécessaire d'avoir un échangeur compact et de grande puissance thermique.

Par « fluide primaire », on entend dans le cadre de l'invention, le sens usuel en thermique, à savoir le fluide chaud qui transfert sa chaleur au fluide secondaire qui est le fluide froid.

A contrario, par « fluide secondaire », on entend dans le cadre de l'invention, le sens usuel en thermique, à savoir le fluide froid auquel est transféré la chaleur du fluide primaire.

Dans l'application principale, le fluide primaire est le sodium qui circule dans la boucle dite secondaire du cycle de conversion thermique d'un réacteur RNR-Na, tandis que le fluide secondaire est l'azote qui circule dans la boucle tertiaire dudit cycle.

### Technique antérieure

Les échangeurs à tubes connus sont par exemple des échangeurs à tubes et calandre, dans lesquels un faisceau de tubes droits ou cintrés en forme de U ou en forme d'hélice est fixé sur des plaques percées et disposé à l'intérieur d'une enceinte étanche dénommée calandre. Dans ces échangeurs à tubes et calandre, l'un des fluides circule à l'intérieur des tubes tandis que l'autre fluide circule à l'intérieur de la calandre. Ces échangeurs à tubes et calandre présentent un volume important et sont donc de faible compacité.

Les échangeurs de chaleur, dits à plaques, existants présentent des avantages importants par rapports aux échangeurs de chaleur, dits à tubes, existants, en particulier leurs performances thermiques et leur compacité grâce à un rapport de la surface sur le volume d'échanges thermiques favorablement élevé. Les échangeurs compacts à plaques sont utilisés dans de nombreux domaines industriels. Dans ce domaine des échangeurs compacts à plaques, de nombreuses formes élémentaires définissant des motifs d'échanges thermiques ont été développées.

On peut citer en premier lieu les échangeurs à plaques intégrant des ailettes, dans lesquels un motif d'échange thermique est défini par une structure délimitée par des ailettes, les structures étant rapportées entre deux plaques métalliques et pouvant avoir des géométries très variées. Le motif d'échange peut être différent entre un des deux circuits de fluides de l'échangeur et l'autre. L'assemblage entre plaques métalliques se fait usuellement par brasage, ou par soudage-diffusion.

Il est également connu des échangeurs à plaques à ondulations ou corruguées. Les ondulations sont créées par emboutissage d'une plaque séparant les deux circuits de fluides. De ce fait, le motif d'échange est identique pour chacun des deux circuits de fluides.

L'écoulement de fluides généré par ce type de motif d'échanges est tridimensionnel et, de ce fait, est très performant. L'assemblage entre plaques se fait soit par liaison boulonnée soit par leur soudage périphérique (soudage classique, ou par soudage-diffusion).

Il est enfin connu des échangeurs à plaques à rainures usinées, l'usinage étant mécanique ou réalisé par voie électrochimique. Les canaux définis par les usinages sont de section millimétrique et sont le plus souvent continus et selon un profil régulier en zigzag. L'assemblage des plaques se fait par soudage-diffusion permettant une soudure sur tous les points de contacts entre deux plaques adjacentes. Ce type d'échangeur à plaques à rainures usinées est donc intrinsèquement très résistant à la pression.

Certains inventeurs de la présente invention ont conçu un échangeur à modules à empilement de plaques pour l'échange de chaleur entre un gaz et un métal liquide dans le cadre de la réalisation d'un réacteur nucléaire de la famille des réacteurs dits de quatrième génération, c'est-à-dire dans une configuration d'échange thermique entre un excellent caloporteur, le métal liquide, typiquement le sodium liquide (Na) et un fluide aux propriétés de transport thermique bien moindre, le gaz, typiquement l'azote (N2).

La demande de brevet WO2015/028923 A1 décrit et revendique ainsi un échangeur de chaleur dans lequel les modules échangeur de chaleur sont agencés à l'intérieur de et fixés rigidement à une enceinte pressurisée par la pression du gaz, typiquement à environ 180 bar, par l'intermédiaire d'une structure de support et de maintien tandis que la tuyauterie de distribution du métal liquide n'est pas fixée à cette structure support.

Dans cette conception, l'enceinte étanche a un rôle de collecteur du circuit de gaz et le dimensionnement des modules échangeurs de chaleur est piloté en premier lieu par le gaz, car c'est le moins bon caloporteur des deux fluides.

Alors que la taille du motif d'échange des canaux de circulation du gaz est strictement dictée par des contraintes de performance thermo-hydraulique, la taille des canaux de circulation du métal liquide doit prendre en considération les risques de bouchage liés à la circulation du métal liquide, ce qui limite la section minimale des canaux de circulation de ce dernier. En tenant compte également des différences de caractéristiques physiques, plus particulièrement de densité, entre un gaz et un métal liquide, un module échangeur résultant présente des pertes de charge dans les canaux de circulation du métal liquide qui sont très faibles, typiquement de l'ordre de 40 mbar.

Par ailleurs, dans un souci de compacité, chaque module échangeur a une puissance thermique unitaire de l'ordre de quelques dizaines de MWth, ce qui implique, avec les règles de dimensionnement, un très grand nombre de canaux de circulation de fluides, typiquement égal à environ 5000 pour un module.

Une autre contrainte à considérer provient du fait que chaque module est agencé à l'intérieur d'une enceinte pressurisée par le gaz.

En fonctionnement, les structures alimentant et récupérant le métal liquide, constituées des collecteurs et de la tuyauterie de distribution, peuvent être soumises à des efforts de compression à haute température qui sans précaution particulière pourraient conduire à un endommagement par flambage sous fluage. Aussi, d'un point de vue thermomécanique, ces structures doivent être conçues les plus compactes possibles.

En d'autres termes, la configuration des modules échangeurs de chaleur à l'intérieur de l'enceinte pressurisée par le gaz, selon la demande WO2015/028923 A1 précitée, implique un très grand nombre de canaux par module avec une grande compacité.

Cette configuration peut induire une distribution du métal liquide non uniforme dans les canaux au sein de chaque module échangeur, ce qui peut être préjudiciable d'une part à l'efficacité thermique globale de l'échangeur et d'autre part à la tenue thermomécanique des structures de l'échangeur.

De fait, le cahier des charges fonctionnel des modules échangeurs de chaleur auquel les inventeurs ont été confrontés peut être résumé ainsi :
- assurer la tenue mécanique sous pression et en température aussi bien en régime permanent qu'en régime transitoire ;
- garantir une distribution de débit homogène entre les canaux d'échange thermique tout en maitrisant l'ajout de pertes de charge ;
- présenter une faible inertie thermique pour limiter l'amplitude des contraintes thermiques lors de régimes transitoires rapides ;
- être compatible avec différents agencements des modules (parallèle/série, empilable...) pour répondre aux objectifs de puissance compatible avec les débits et pressions dans les circuits de fluide.

Une mauvaise distribution de débit se caractérise par une suralimentation de certains canaux d'échange thermique au détriment de certains autres.

Pour assurer une distribution satisfaisante, la demanderesse a proposé dans le brevet FR3054879B1 une solution consistant à réaliser une zone à bifurcations, référencée Z3 dans ce brevet, dans la continuité amont ou aval de la zone d'échange proprement dite. De manière schématique, à débit constant, en réalisant quatre bifurcations pour une entrée donnée, on diminue la section de passage par quatre, et on augmente les pertes de charge du faisceau de canaux d'un facteur 16. Cette solution présente donc l'avantage primordial d'ajouter rapidement des pertes de charge au faisceau, mais cela peut aussi devenir un inconvénient. C'est pourquoi, pour régler la distribution en minimisant l'ajout de pertes de charge, le brevet FR3054879B1 propose également une zone d'homogénéisation, référencée Z1 dans ce brevet. A la manière d'une grille placée sous l'admission, cette zone d'homogénéisation casse l'effet de jets et met en communication les canaux et les plaques d'un même circuit de fluide pour en équilibrer les pressions. L'intérêt de cette zone d'homogénéisation est qu'elle est intégrée directement dans le design des plaques. Il ne s'agit pas d'un élément rapporté dont la fixation peut devenir incompatible avec les chargements thermomécaniques. Les zones référencées Z1, Z2, et Z3 dans ce brevet FR3054879B1 forment en quelque sorte un pré-collecteur.

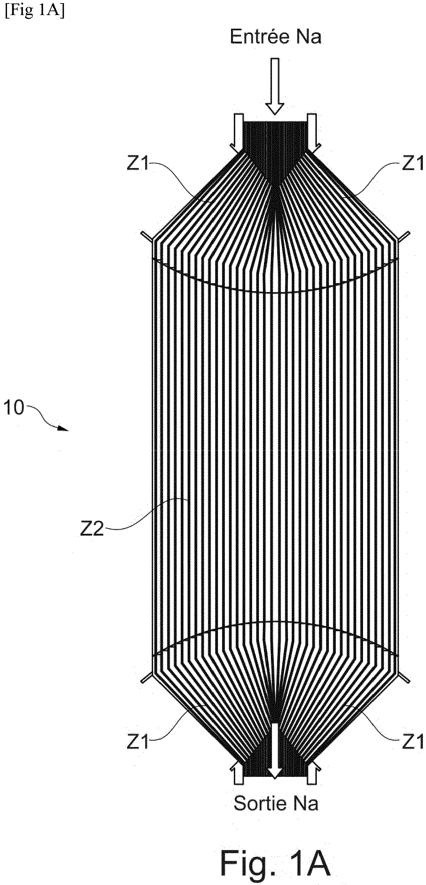

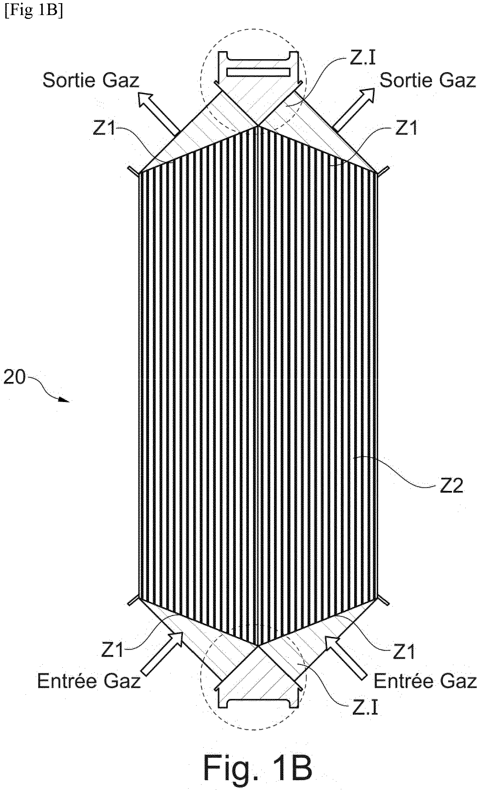

Une amélioration de ce brevet FR3054879B1 consiste à réaliser les plaques avec une symétrie axiale, les zones d'homogénéisation étant agencées symétriquement de part et d'autre l'axe longitudinal des plaques, comme illustré en figures 1A et 1B pour une plaque de circulation respectivement de sodium liquide et de gaz dans une application d'échangeur pour réacteur nucléaire RNR-Na. La plaque 10 de circulation de sodium comprend ainsi une zone Z1 d'homogénéisation avec bifurcations au niveau de l'entrée axiale 100 et de la sortie axiale 200, et une zone d'échange thermique Z2 à canaux droits rectilignes entre ces deux zones Z1. La plaque 20 de circulation du gaz comprend également une zone Z1 d'homogénéisation également avec bifurcations sur laquelle débouchent les deux entrées 200 et les deux sorties 201, et une zone d'échange thermique Z2 également à canaux droits rectilignes entre ces deux zones Z1, cette zone Z2 de la plaque 20 étant de même longueur que celle de la plaque 10. Cette amélioration est décrite dans la publication [1]. Avec cette amélioration, on réduit l'inertie thermique globale des plaques 10, 20 et on peut réaliser un empilement de modules d'échanges de chaleur, ce qui est avantageux pour l'encombrement.

Cela étant, plusieurs inconvénients subsistent avec cette configuration.

Tout d'abord, l'agencement des pré collecteurs constituées par les zones d'homogénéisation Z1 impose que les arrivées des fluides soient dans le prolongement des canaux d'échange, soit axiales pour la plaque de circulation de sodium et latérales accolées à l'axe longitudinal pour les plaques de circulation du gaz. Or, dans bon nombre d'applications, notamment dans une application RNR-Na, il serait souhaitable notamment de pouvoir placer une admission sur les faces d'un module d'échange afin de faciliter le tracé de la tuyauterie de circulation en dehors des modules, notamment en minimisant les longueurs de ladite tuyauterie.

De plus, pour affiner les distributions tout en maitrisant les pertes de charge, il serait intéressant de s'affranchir des bifurcations qui augmentent très rapidement ces dernières.

Enfin, avec cette configuration il reste au final des zones d'inertie thermique, telles que symbolisées par les cercles en pointillés Z.I en figure 1B, qu'il serait intéressant de réduire.

Il existe donc un besoin pour améliorer encore les modules d'échangeur à plaques, notamment afin de simplifier la tuyauterie de circulation des fluides en dehors des modules, de diminuer les pertes de charge au sein des modules, et de réduire encore les zones d'inertie thermique et ce en conservant la possibilité d'empiler les modules entre eux.

Le but de l'invention est de répondre à ce besoin.

### Exposé de l'invention

Pour ce faire, l'invention concerne un module d'échangeur de chaleur à au moins deux circuits de fluides, d'axe longitudinal (X) comprenant un empilement de définissant au moins deux circuits de fluide, au moins une partie des plaques comprenant chacune des canaux de circulation de fluide, les canaux d'au moins l'un des deux circuits, dit premier circuit, présentant:
- au moins une zone d'alimentation et de distribution (Z_{H}) du fluide depuis l'extérieur de l'empilement, formant un pré-collecteur du fluide, dans laquelle les canaux sont délimités par des plots répartis sur la surface de plaque;
- une zone d'échange (Z_{E}) continue avec le pré-collecteur dans laquelle les canaux sont délimités chacun par une rainure séparés entre eux par une nervure et s'étendent le long de l'axe longitudinal (X).

Selon un mode de réalisation avantageux, le module comprend deux pré-collecteurs du premier circuit, agencés chacun à l'une des extrémités longitudinales de l'empilement, l'un des deux pré-collecteurs formant un pré-collecteur d'entrée de fluide, l'autre formant un pré-collecteur de sortie du fluide.

Selon un autre mode de réalisation avantageux, les canaux de l'autre des deux circuits dit deuxième circuit présentent également:
- au moins une zone d'alimentation et de distribution (Z_{H}) du fluide depuis l'extérieur de l'empilement, formant un pré-collecteur du fluide, dans laquelle les canaux sont délimités par des plots répartis sur la surface de plaque;
- une zone d'échange (Z_{E}) continue avec le pré-collecteur dans laquelle les canaux sont délimités chacun par une rainure, séparés entre eux par une nervure et s'étendent le long de l'axe longitudinal (X).

Selon ce mode, le module comprend avantageusement deux pré-collecteurs du deuxième circuit, agencés chacun à l'une des extrémités longitudinales de l'empilement, l'un des deux pré-collecteurs formant un pré-collecteur d'entrée de fluide, l'autre formant un pré-collecteur de sortie du fluide.

Selon une première variante de réalisation avantageuse, les plots du premier circuit et/ou du deuxième circuit sont pleins.

Selon une deuxième variante de réalisation avantageuse, les plots du premier circuit et/ou du deuxième circuit sont percés et débouchants de sorte à permettre la communication entre canaux des plaques de la zone d'alimentation et de distribution du premier ou du deuxième circuit mais pas avec ceux des plaques du deuxième ou respectivement du premier circuit.

Selon un mode de réalisation avantageux, le module comprend au moins à l'une des extrémités longitudinales de l'empilement, un collecteur de fluide débouchant sur une embase latérale de l'empilement sur laquelle les canaux du pré-collecteur du premier circuit débouchent mais pas ceux du pré-collecteur du deuxième circuit.

Selon ce mode, le module comprend avantageusement à l'une des extrémités longitudinales, un collecteur de fluide formant le collecteur d'entrée du premier circuit et à l'autre des extrémités longitudinales, un collecteur de fluide formant le collecteur de sortie du premier circuit.

Selon un autre mode de réalisation avantageux, le module comprend au moins sur un côté latéral de l'empilement, un collecteur de fluide traversant l'empilement transversalement à l'axe (X) et débouchant sur les canaux du pré-collecteur du deuxième circuit mais pas sur ceux du premier circuit.

Selon ce mode, le module comprend avantageusement au moins sur un même côté latéral de l'empilement, un collecteur de fluide formant le collecteur d'entrée du deuxième circuit et un collecteur de fluide formant le collecteur de sortie du deuxième circuit.

Selon une alternative de configuration, les plots sont uniformément répartis en quinconce sur la surface de plaque du pré-collecteur, selon un motif triangulaire.

Selon une autre alternative, les plots uniformément répartis sur la surface de plaque du pré-collecteur selon un motif rectangulaire ou carré.

De préférence encore, les plots sont de forme générale cylindrique.

De préférence encore, les canaux de la zone d'échange du premier circuit et du deuxième circuit sont droits, parallèles entre eux et qui s'étendent parallèlement à l'axe longitudinal (X).

Avantageusement, l'empilement est constitué de plaques métalliques assemblées entre elles soit par compression isostatique à chaud (CIC), soit par compression uniaxiale à chaud (CUC) de sorte à obtenir un soudage par diffusion entre les plaques métalliques, soit par brasage, soit réalisé par fabrication additive.

Selon une configuration avantageuse, une plaque du premier circuit est intercalée entre deux plaques du deuxième de circuit au moins dans la partie centrale de l'empilement.

L'invention concerne également un échangeur de chaleur, comprenant une pluralité de modules d'échangeur de chaleur tels que celui décrit précédemment.

Selon une configuration avantageuse, les modules décrits précédemment sont agencés côte-à-côte avec les collecteurs d'entrée et de sortie du deuxième circuit traversant et reliant les modules entre eux latéralement.

L'invention concerne également l'utilisation de l'échangeur de chaleur tel que décrit précédemment, le fluide du premier circuit, en tant que fluide primaire étant un métal liquide et le fluide du deuxième circuit, en tant que fluide secondaire, étant un gaz ou un mélange de gaz.

Selon une variante, le fluide du deuxième circuit comprend principalement de l'azote et le fluide du premier circuit est du sodium liquide.

Le fluide du premier ou du deuxième circuit peut provenir d'un réacteur nucléaire.

L'invention concerne également une installation nucléaire comprenant un réacteur nucléaire à neutrons rapides refroidi avec du métal liquide, notamment du sodium liquide dit RNR-Na ou SFR et un échangeur de chaleur comprenant une pluralité de modules d'échangeur tels que celui décrit précédemment Ainsi, l'invention consiste essentiellement à réaliser un module d'échangeur à plaques empilées ou réalisées par fabrication additive, dont au moins un des pré-collecteurs d'un des circuits de fluide est réalisé avec des plots répartis sur la surface de plaque qui délimitent les canaux dans lesquels circule le fluide avant d'atteindre sa zone d'échange thermique.

Ces plots permettent de garantir la tenue sous pression des plaques tout en présentant une faible inertie thermique.

Les plots permettent de garantir une distribution homogène du fluide en minimisant l'ajout de pertes de charge et ce indépendamment de la géométrie des canaux de la zone d'échange thermique.

Les formes géométriques et les répartitions des plots peuvent être modifiés à souhait pour maitriser la distribution du fluide en fonction de l'application envisagée et de ses contraintes notamment de température et de pression.

On peut aussi faire varier la densité de plots dans le pré collecteur.

Grâce aux plots selon l'invention en lieu et places des bifurcations selon le brevet FR3054879B1, on s'affranchit aussi des zones d'inertie thermique Z.I telles qu'illustrées en figure 1B.

En outre, les plots selon l'invention permettent de définir des géométries de modules d'échangeurs avec une admission et une sortie de fluide sur une même face longitudinale de module pour obtenir un agencement de modules côte-à-côte et minimiser les longueurs de tuyauterie entre eux.

Toutes les applications nécessitant des échangeurs de chaleur ou générateur vapeur peuvent être envisagées avec des modules d'échangeur selon l'invention, parmi lesquelles on peut citer, tous les types de réacteurs nucléaires GEN 3, GEN 4, SMR (acronyme anglais pour « Small Medium Reactor), les réseaux de chaleur urbain, les électrolyseurs EHT, l'industrie du pétrole et gaz, l'industrie du solaire, l'industrie chimique...

D'autre avantages et caractéristiques ressortiront mieux à la lecture de la description détaillée, faite à titre illustratif et non limitatif, en référence aux figures suivantes.

### Brève description des dessins

[Fig 1A] la figure 1A est une vue d'une plaque à canaux de circulation de sodium liquide d'un module d'échangeur de chaleur selon l'état de l'art, destiné à un réacteur RNR-Na.
[Fig 1B] la figure 1B est une vue d'une plaque à canaux de circulation de gaz du module d'échangeur à plaque de circulation du sodium selon la figure 1A.
[Fig 2] la figure 2 est une vue de côté longitudinal d'un module d'échangeur de chaleur selon l'invention.
[Fig 3] la figure 3 est une vue de face du module d'échangeur selon la figure 2.
[Fig 4A] la figure 4A est une vue en perspective et en arraché partiels d'un module d'échangeur selon une première alternative de l'invention, la figure 4A montrant la circulation du sodium liquide au sein d'une plaque à canaux dédiée.
[Fig 4B] la figure 4B est une vue en perspective et en arraché partiels d'un module d'échangeur selon la première alternative de l'invention, la figure 4B montrant la circulation du gaz, typiquement N2 au sein d'une plaque à canaux dédiée.
[Fig 4C] la figure 4C est une vue de détail de la figure 4A montrant l'empilement alterné des plaques de circulation de sodium liquide et de gaz au niveau de leur zone d'homogénéisation.
[Fig 5] la figure 5 est une vue de face d'une plaque à canaux de circulation de sodium liquide selon la première alternative de l'invention.
[Fig 5A] la figure 5A est une vue en perspective partielle de la plaque selon la figure 5.
[Fig 6] la figure 6 est une vue de face d'une plaque à canaux de circulation de gaz selon la première alternative de l'invention.
[Fig 6A] la figure 6A est une vue en perspective partielle de la plaque selon la figure 6.
[Fig 7A] la figure 7A est une vue en perspective et en arraché partiels d'un module d'échangeur selon une deuxième alternative de l'invention, la figure 7A montrant la circulation du sodium liquide au sein d'une plaque à canaux dédiée.
[Fig 7B] la figure 7B est une vue en perspective et en arraché partiels d'un module d'échangeur selon la deuxième alternative de l'invention, la figure 7B montrant la circulation du gaz, typiquement N2 au sein d'une plaque à canaux dédiée.
[Fig 7C] la figure 7C est une vue de détail de la figure 7A montrant l'empilement alterné des plaques de circulation de sodium liquide et de gaz au niveau de leur zone d'homogénéisation.
[Fig 8] la figure 8 est une vue de face d'une plaque à canaux de circulation de sodium liquide selon la deuxième alternative de l'invention.
[Fig 8A] la figure 8A est une vue en perspective partielle de la plaque selon la figure 8.
[Fig 9] la figure 9 est une vue de face d'une plaque à canaux de circulation de gaz selon la deuxième alternative de l'invention.
[Fig 9A] la figure 9A est une vue en perspective partielle de la plaque selon la figure 9.
[Fig 10] la figure 10 est une vue de face de détail montrant une répartition en quinconce selon un motif régulier triangulaire des plots d'une plaque à canaux selon l'invention.
[Fig 11] la figure 11 est une vue de face de détail montrant une répartition selon un motif régulier en carré des plots d'une plaque à canaux selon l'invention.
[Fig 12A] la figure 12A est une vue en perspective et en arraché partiels d'un module d'échangeur selon une variante d'amenée du sodium liquide, la figure 12A montrant la circulation du sodium liquide au sein d'une plaque à canaux dédiée.
[Fig 12B] la figure 12B est une vue en perspective et en arraché partiels d'un module d'échangeur selon la variante d'amenée du sodium liquide, la figure 12B montrant la circulation du gaz au sein d'une plaque à canaux dédiée.
[Fig 13] la figure 13 est une vue schématique montrant un agencement avantageux de plusieurs modules échangeurs selon l'invention.
[Fig 14] la figure 14 illustre une simulation numérique montrant l'écoulement de fluide notamment dans une zone d'homogénéisation formant un pré-collecteur selon l'invention pour un empilement d'un nombre de neuf plaques de circulation N2.
[Fig 15] la figure 15 illustre une simulation numérique montrant l'écoulement de fluide notamment dans une zone d'homogénéisation formant un pré-collecteur selon l'invention pour un empilement d'un nombre de dix plaques de circulation Na.

### Description détaillée

Par souci de clarté, les mêmes éléments sont désignés par les mêmes références numériques selon l'état de l'art et selon l'invention.

On précise que dans l'ensemble de la demande, les termes « entrée », « sortie », « amont », «aval » sont à comprendre en relation avec le sens de la circulation du fluide considéré au sein d'un module d'échange de chaleur selon l'invention.

Les figures 1A et 1B relatives à l'état de l'art ont déjà été commentées en préambule. Elles ne le seront donc pas ci-après.

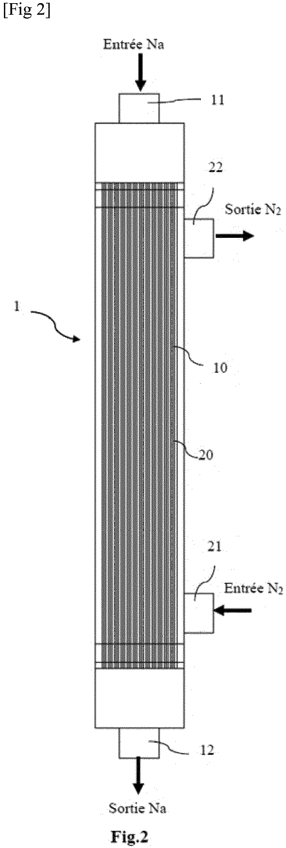

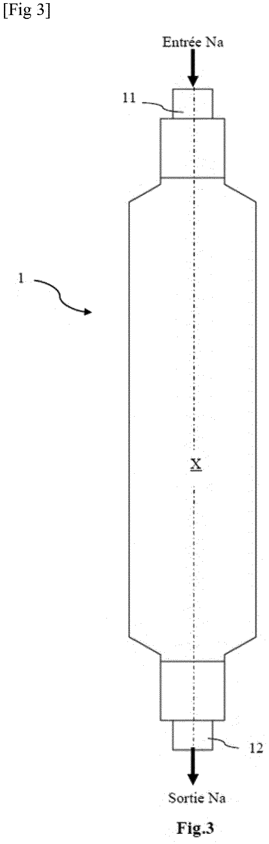

En figures 2 et 3, on a représenté un réaliser un module 1 d'échangeur de chaleur selon l'invention à deux circuits de fluides, qui est mis en œuvre à titre d'exemple pour un échange entre du sodium liquide(Na) et de l'azote (N2).

Le module 1 est constitué d'un empilement alterné de plaques métalliques 10, 20 assemblées entre elles par soudage-diffusion de préférence selon une technique de CIC, ou réalisé par fabrication additive.

Comme visible sur ces figures, ce module 1 qui s'étend selon un axe central (X), intègre deux collecteurs 11, 12 respectivement d'entrée et de sortie du sodium liquide (Na), l'un étant agencé sur le dessus du module selon l'axe X et l'autre étant agencé également selon l'axe X du module mais sur le dessous. Comme détaillé par la suite, chacun des collecteurs 11, 12 débouche sur une embase latérale de l'empilement de plaques sur laquelle les canaux du circuit de Na débouchent mais pas ceux du circuit de N2.

Le module 1 comprend également deux collecteurs 21, 22, respectivement d'entrée et de sortie d'azote (N2) agencé sur une même face longitudinale, respectivement en bas du module, et en haut du module. Comme détaillé par la suite, chacun des collecteurs d'entrée 21 et de sortie 22 traverse l'empilement transversalement à l'axe (X) et débouche sur les canaux du circuit de N2 mais pas sur ceux du circuit de Na.

Dans un tel module 1, la circulation des fluides (Na, N2) est donc à contre-courant.

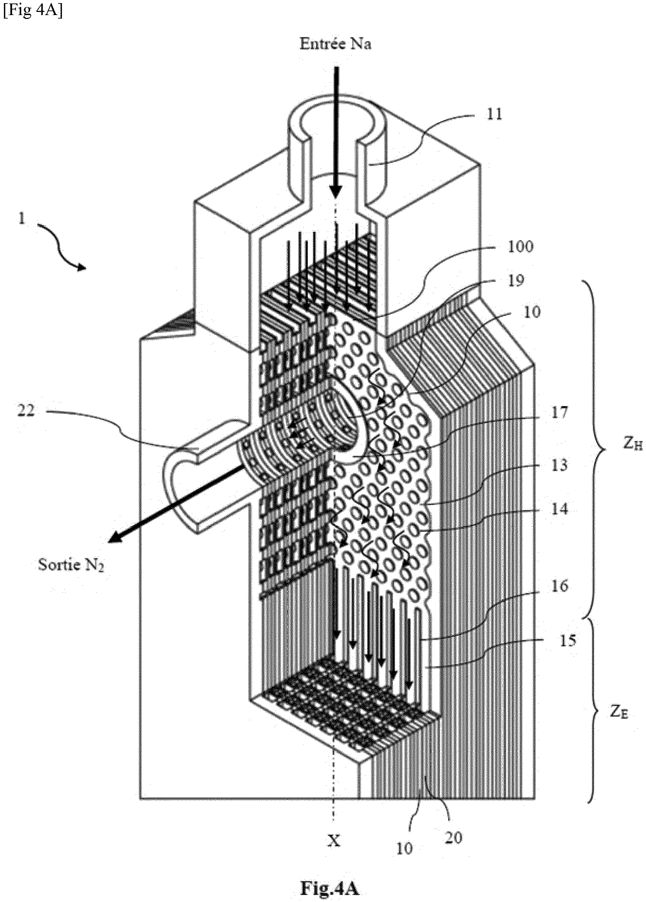

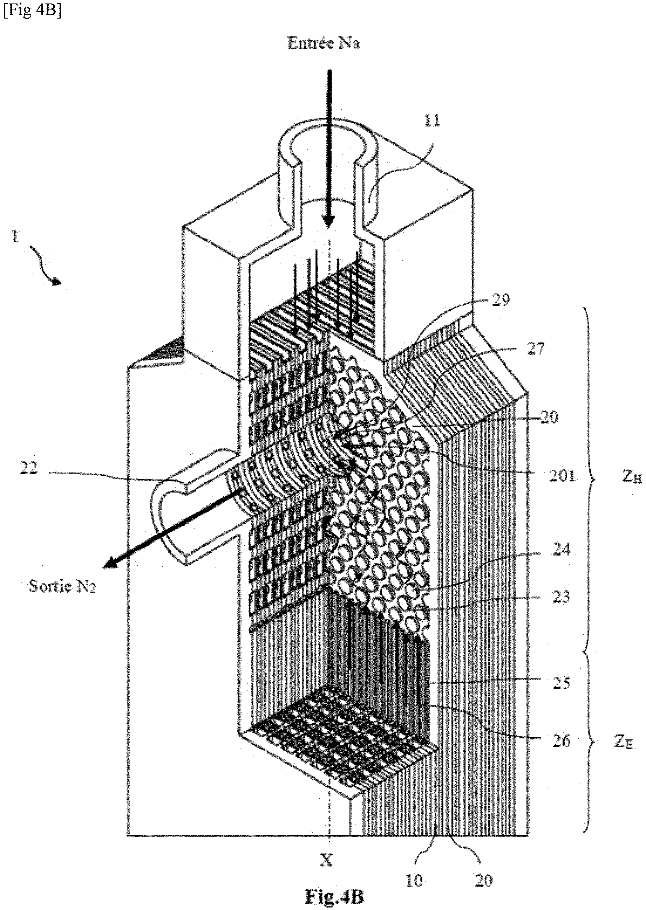

Les figures 4A et 4B montrent l'empilement ainsi que respectivement la circulation au sein d'une plaque 10 de circulation de Na et une plaque 20 de circulation de N2, les flèches symbolisant la circulation de chacun des fluides dans chaque plaque concernée.

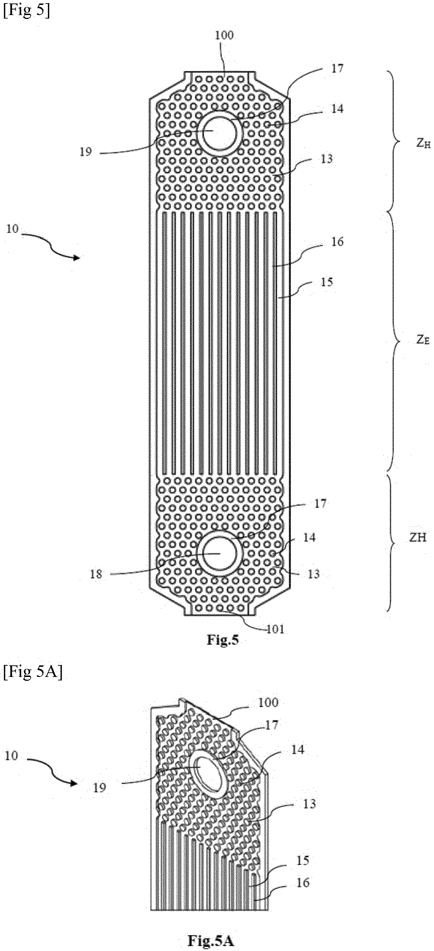

Les figures 5, 5A montrent une plaque 10 de circulation de Na.

Une plaque 10 comprend deux zones d'alimentation et de distribution Z_{H} formant chacune un pré-collecteur du fluide, agencées de part et d'autre d'une zone d'échange thermique Z_{E}.

Selon l'invention, les canaux 13 d'un pré-collecteur Z_{H} sont délimités par des plots cylindriques pleins 14 répartis sur la surface de plaque. De préférence, comme montré en figures 4A, 5 et 5A, les plots cylindriques pleins 14 sont uniformément répartis en quinconce sur la surface de plaque du pré-collecteur. Plus précisément, cette répartition en quinconce est faite selon un motif triangulaire identique sur toute la surface des plaques 10 du pré-collecteur Z_{H}. Une répartition selon un motif triangulaire permet un meilleur remplissage du volume du pré-collecteur par les plots 14 et est privilégiée pour assurer la tenue en pression du module d'échangeur.

Les canaux 13 délimités par les plots 14 cylindriques pleins débouchent sur les canaux 15 de la zone d'échange thermique Z_{E} qui est continue avec le pré-collecteur. Comme montré, les canaux 15 de la zone d'échange sont délimités chacun par une rainure 15 séparés entre eux par une nervure 16 et s'étendent le long de l'axe longitudinal (X). De préférence, comme montré, ils sont droits, parallèles entre eux et s'étendent parallèlement à l'axe longitudinal (X) du module 1.

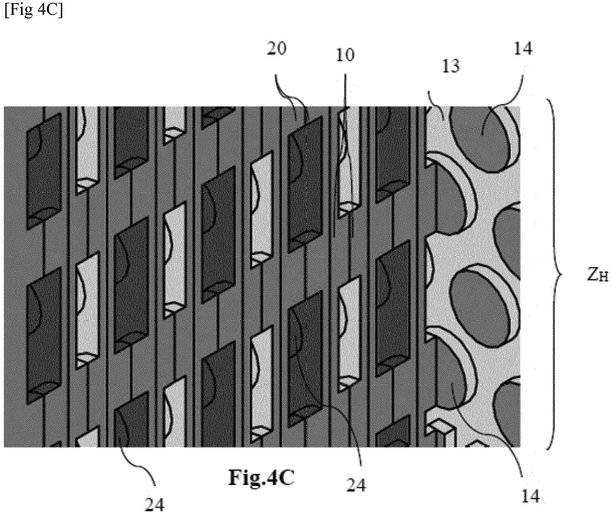

Les plots 14 peuvent être d'une hauteur telle qu'ils viennent en appui directement contre une plaque 20. Comme illustré en figure 4C, on peut aussi prévoir deux plaques 10 adjacentes avec des plots 14 cylindriques dont la hauteur représente une partie de la hauteur d'un canal 13, qui une fois les plaques assemblées entre elles, définissent la hauteur totale du canal. Il en va de même pour les nervures 16. L'agencement des plots 14 permet de garantir la tenue sous pression des plaques 10.

Un anneau 17 s'étend autour de chacun de deux trous 18, 19 de section circulaire débouchant chacun à travers la plaque 10 au sein de l'un des pré-collecteurs. Ces trous débouchant 18, 19 forment une partie du tube du collecteur respectivement d'entrée et de sortie de circulation de l'autre circuit, N₂. L'anneau 17 forme ainsi une barrière étanche entre les circuits Na et N2 au niveau des pré-collecteurs des plaques 10.

Avec une telle plaque 10, comme cela est illustré en partie en figure 4A, le sodium liquide est alimenté depuis le collecteur tubulaire 11 d'entrée pour être distribué depuis l'entrée 100 des canaux 13 délimité par les plots 14. Le sodium liquide circule dans les canaux 13 autour des plots 14 du pré-collecteur d'entrée, pour parvenir jusqu'aux canaux 15 de la zone d'échange thermique Z_{E} puis circule autour des plots 14 du pré-collecteur de sortie pour être évacué par la sortie 101 des canaux 13 puis récupéré par le collecteur de sortie 12.

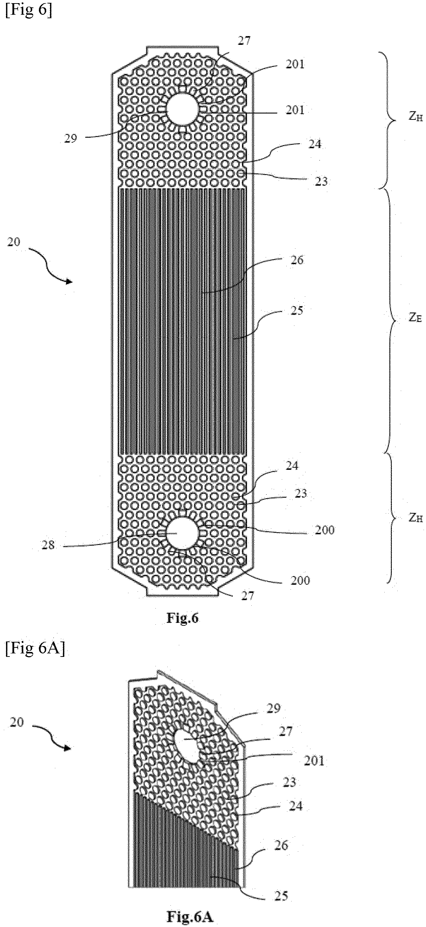

Les figures 6, 6A montrent une plaque 20 de circulation de N2, réalisée de manière analogue à une plaque 10 de circulation de Na.

Ainsi, une plaque 20 comprend deux zones d'alimentation et de distribution Z_{H} formant chacune un pré-collecteur du fluide, agencées de part et d'autre d'une zone d'échange thermique Z_{E}.

Les canaux 23 d'un pré-collecteur Z_{H} sont délimités par des plots cylindriques pleins 24 répartis sur la surface de plaque. De préférence, comme montré en figures 4B, 6 et 6A, les plots cylindriques pleins 24 sont uniformément répartis en quinconce sur la surface de plaque du pré-collecteur. Ici encore, cette répartition en quinconce est faite selon un motif triangulaire identique sur toute la surface des plaques 20 du pré-collecteur ZH. Une répartition selon un motif triangulaire permet un meilleur remplissage du volume du pré-collecteur par les plots 24 et est privilégiée pour assurer la tenue en pression du module d'échangeur.

Les canaux 23 délimités par les plots 24 cylindriques pleins débouchent sur les canaux 25 de la zone d'échange thermique Z_{E} qui est continue avec le pré-collecteur. Comme montré, les canaux 25 de la zone d'échange sont délimités chacun par une rainure 25 séparés entre eux par une nervure 26 et s'étendent le long de l'axe longitudinal (X). De préférence, comme montré, ils sont droits, parallèles entre eux et s'étendent parallèlement à l'axe longitudinal (X) du module 1.

Les plots 24 peuvent être d'une hauteur telle qu'ils viennent en appui directement contre une plaque 20. Comme illustré en figure 4C, on peut aussi prévoir deux plaques 20 adjacentes avec des plots 24 cylindriques dont la hauteur représente une partie de la hauteur d'un canal 23, qui une fois les plaques assemblées entre elles, définissent la hauteur totale du canal. Il en va de même pour les nervures 26. L'agencement des plots 24 permet de garantir la tenue sous pression des plaques 20.

Deux trous 28, 29 de section circulaire débouchent chacun à travers la plaque 20 au sein de l'un des pré-collecteurs. Ces trous débouchant 28, 29 forment une partie du tube du collecteur respectivement d'entrée et de sortie de circulation de l'autre circuit, N2.

Des plots 27 de forme trapézoïdale sont uniformément répartis autour de chacun des trous 28, 29 pour délimiter des canaux d'entrée 200 ou de sortie 201 de dimensions uniformes qui relient donc chacun des trous 28, 29 à l'un des pré-collecteurs Z_{H} respectivement d'entrée et de sortie.

Avec une telle plaque 10, comme cela est illustré en partie en figure 4B, l'azote est alimenté depuis le collecteur tubulaire 21d'entrée qui traverse l'empilement de plaques 10, 20 pour être distribué dans les canaux d'entrée 200 puis dans les canaux 23 délimité par les plots 24. L'azote circule autour des plots 24 du pré-collecteur d'entrée, pour parvenir jusqu'aux canaux 25 de la zone d'échange thermique Z_{E} puis circule dans les canaux 23 autour des plots 24 du pré-collecteur de sortie pour être évacué par les canaux de sortie 201 puis récupéré par le collecteur de sortie 22.

Ainsi, selon l'invention, les plots 14, 24 permettent de garantir une distribution homogène de chacun des fluides, i.e. respectivement le sodium liquide et l'azote, indépendamment de la géométrie des canaux 15, 25 de leur zone d'échange thermique Z_{E} et ce tout en présentant une faible inertie thermique et en minimisant l'ajout de pertes de charge. En outre, comme déjà mentionné, les plots 14, 24 sont dimensionnés pour garantir la tenue à la pression. Typiquement, les plots 24 sont dimensionnés pour assurer une tenue à une pression d'azote de l'ordre de 180 bars.

Dans l'alternative du module illustré aux figures 4A à 6A, les plots 14, 24 des plaques 10, 20 des deux circuits de fluides (Na, N2) sont alignés, c'est-à-dire que l'axe de révolution d'un plot 14 est aligné avec celui d'un plot 24.. Pour chaque plaque 10 ou 20 l'agencement des plots 14 ou 24 d'une même plaque est en quinconce est réalisé de sorte à avoir un plot 14, 24 en regard d'un canal 15, 25 de la zone d'échange thermique Z_{E}.

On peut aussi envisager de réaliser un désaxage, autrement dit un décalage latéral des plots sur la surface des plaques. Un tel désaxage permet de réaliser des plots percés avec des trous débouchants. Ce désaxage s'accompagne d'un changement de répartition selon un motif triangulaire comme illustré pour l'alternative précédente à une répartition selon un motif rectangulaire ou carré.

Sur une même surface, il y a moins de plots lorsqu'ils sont répartis selon un motif rectangulaire ou carré que selon un motif triangulaire. De ce fait, cela dégrade la tenue en pression, mais permet de ménager de la place pour les perçages des plots.

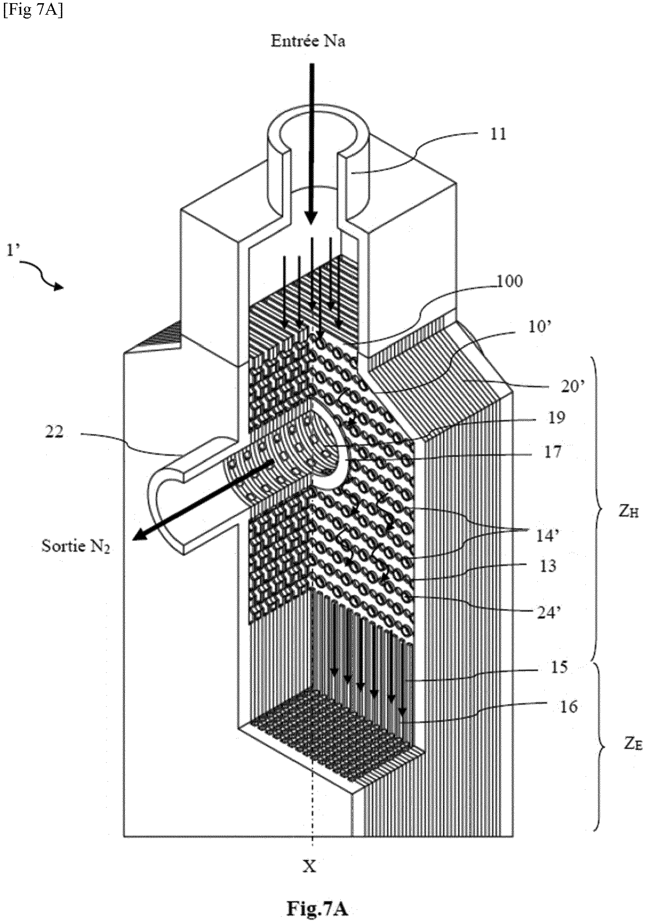

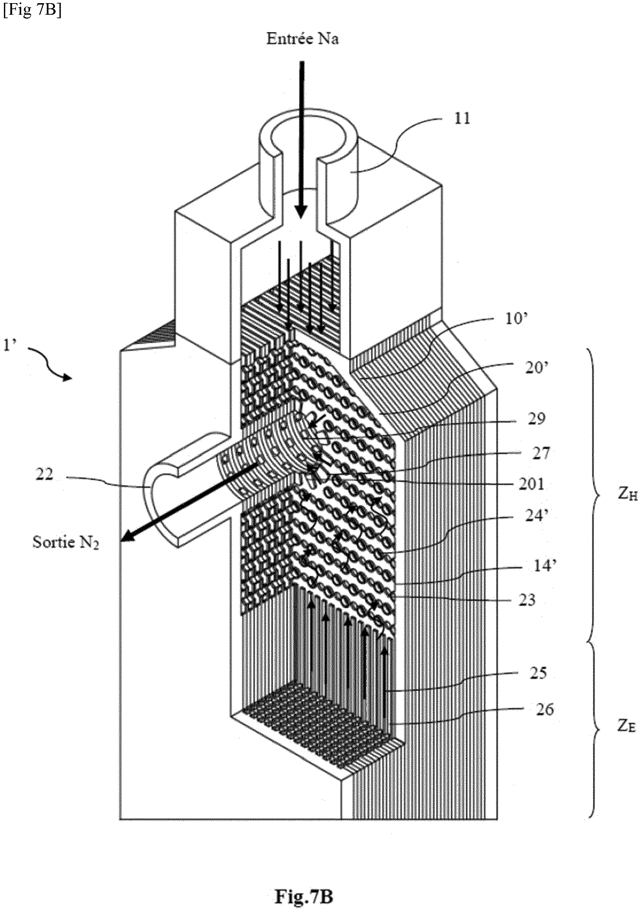

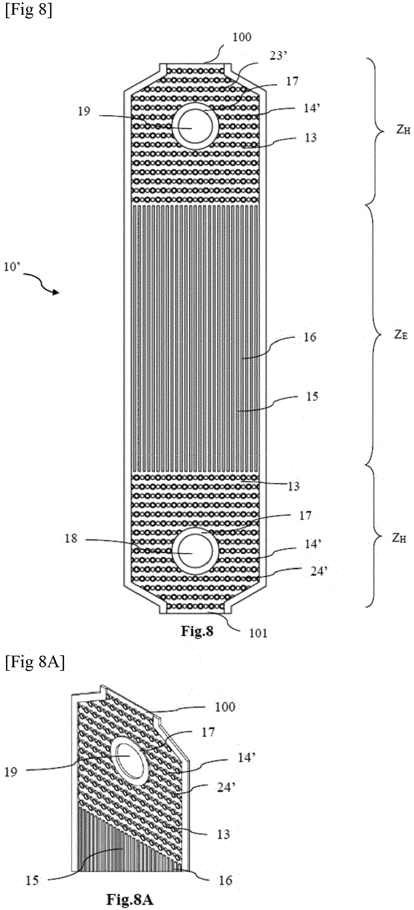

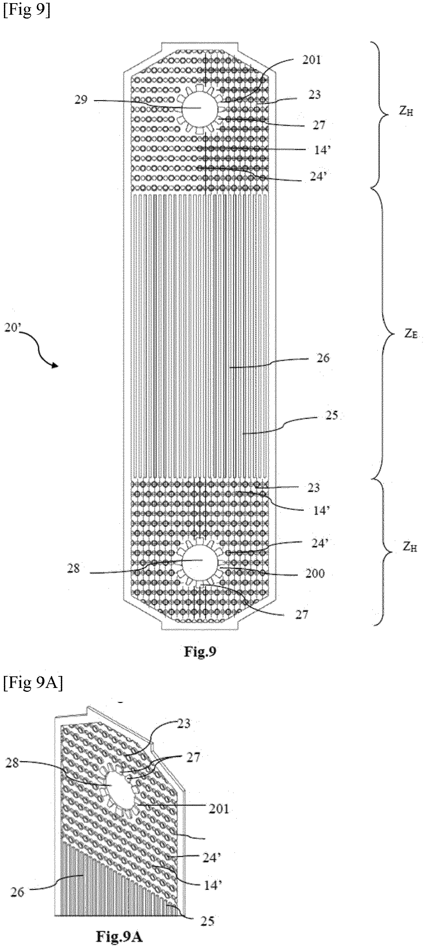

Une telle alternative de réalisation d'un module 1' est montrée aux figures 7A à 9A, dans laquelle les plots 14', 24' respectivement des plaques 10', 20' sont percés en étant débouchant entre les plaques 10 ou 20 d'un même circuit de fluide, Na ou N₂.

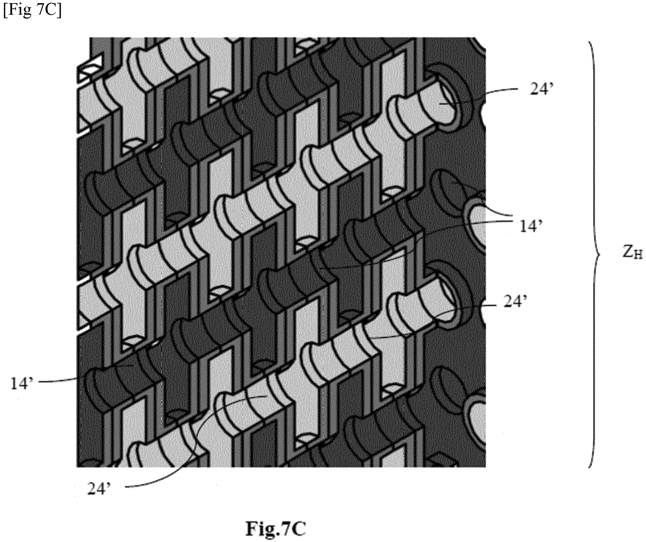

Comme montré en figure 7C, les plots percés 14', 24' créent ainsi des communications entre les plaques 10, 20 d'un même circuit, Na ou N2, au niveau des pré-collecteurs Z_{H}, tout en conservant l'étanchéité avec l'autre circuit, respectivement N2 ou Na.

Cette alternative à plots 14', 24' percés, débouchant permet d'équilibrer les pressions de fluides entre les plaques 10', 20'.

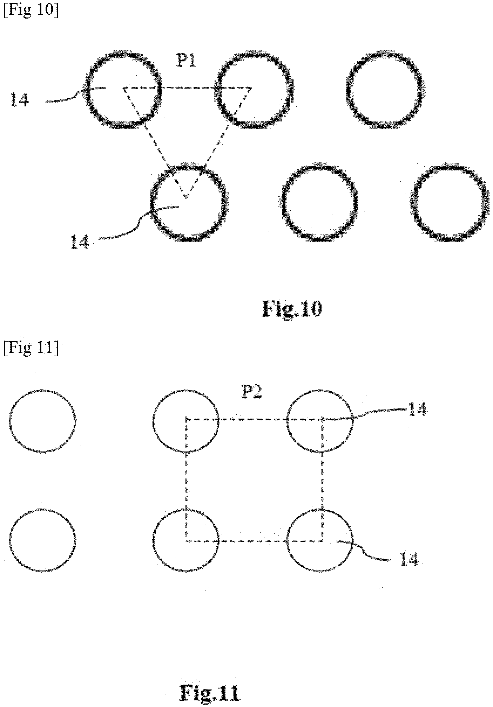

La figure 10 illustre en détail une alternative de répartition en quinconce de plots 14 d'une plaque 10 du circuit Na selon un motif triangulaire équilatéral défini par un pas P1.

La figure 10 illustre une autre alternative de répartition selon laquelle les plots 14 sont répartis selon un motif carré défini par un pas P2.

L'une ou l'autre de ces alternatives peut être mise en œuvre pour les plots 24 des plaques 20 de l'autre circuit.

Dans les figures 2, 3, 4A, 4B, 7A, 7B, le tube des collecteurs 11, 12 respectivement d'entrée et de sortie, à l'extérieur de l'empilement des plaques est agencé selon l'axe longitudinal X.

On peut aussi envisager d'autres agencements de tubes collecteurs.

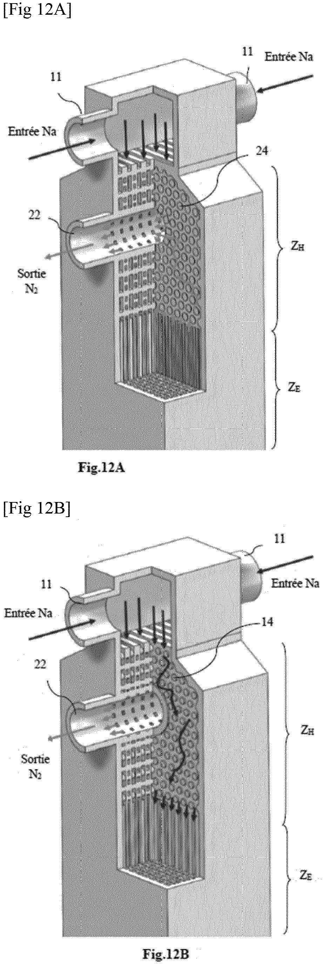

Ainsi, une variante d'agencement est illustrée en figures 12A et 12B, selon laquelle on prévoit deux tubes 11, 12 agencées orthogonalement à l'axe X et donc parallèlement aux collecteurs 21, 22 d'entrée et de sortie du circuit d'azote. Comme montré sur ces figures 12A, 12B, cet agencement permet toujours l'alimentation des plaques 10 en sodium liquide selon l'axe longitudinal X du module d'échangeur 1.

Comme déjà précisé, la réalisation de pré-collecteurs avec des plots 14, 24 selon l'invention permet d'agencer les collecteurs 21, 22 d'entrée et de sortie de l'un des fluides sur une même face longitudinale d'un module 1.

Cet agencement permet avantageusement de faciliter l'agencement relatif entre plusieurs modules et minimiser les longueurs de tuyauterie qui les relie.

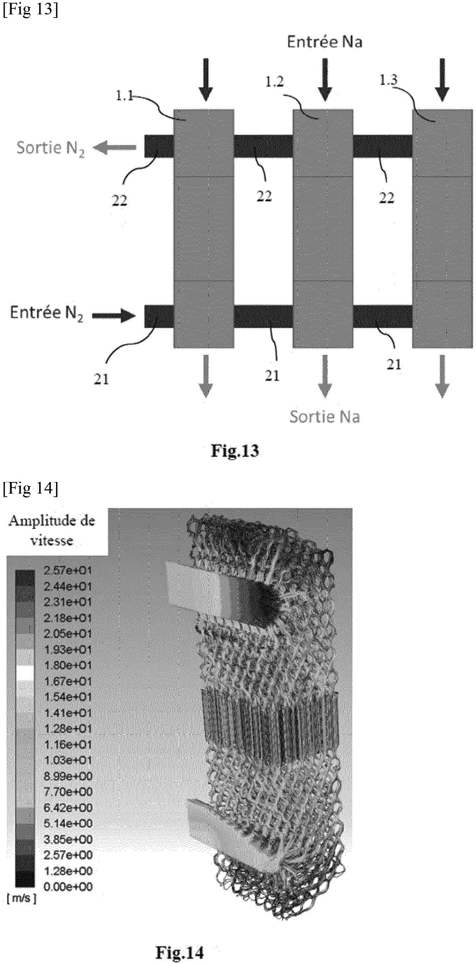

Un exemple d'un tel agencement de modules d'échange est montré en figure 13 où l'on voit trois modules d'échangeur 1.1, 1.2, 1.3 agencés côte-à-côte directement reliés les uns aux autres par les tubes 21, 22 des collecteurs d'entrée et de sortie du circuit d'azote, qui sont rectilignes et droits.

Les inventeurs ont d'ores et déjà réalisé des prédimensionnements mécaniques d'un module d'échangeur 1, 1' selon l'invention pour une utilisation un échange de chaleur sodium(Na)/gaz(N2) comme dans le cadre d'un réacteur nucléaire RNR-Na.

Les températures et pression des circuits Na et N2 sont synthétisées dans le [tableau 1] ci-dessous.

**[Tableau 1]**

| | Plaque 10 de circulation de Na | Plaque 20 de circulation de N₂ |
|---|---|---|
| T entrée (°C) | 530 | 290 |
| T sortie °C | 345 | 515 |
| Pression bars | 5 | 180 |

Les prédimensionnements ont été réalisés avec une plage de pas triangulaires de canaux 13, 23, i.e. entre plots 14, 24 de 6 à 12 mm et de diamètres de plots cylindriques 14, 24 de 4 à 8mm.

Avec ces prédimensionnement mécaniques ainsi réalisés, les inventeurs ont conclu sur la bonne tenue en pression d'un module d'échangeur 1 selon l'invention.

En outre, des études fluidiques ont permis, via un processus itératif entre des calculs de mécanique des fluides numérique (MFN), (en anglais « Computational Fluid Dynamics » d'acronyme CFD) et de conception assistée par ordinateur (CAO), de converger vers une conception de module d'échangeur 1 avec une maldistribution de fluides, c'est-à-dire un écart-type des débits entre canaux d'échange d'un même fluide, qui est inférieure à 5% dans l'ensemble des canaux 13, 23, 15, 25.

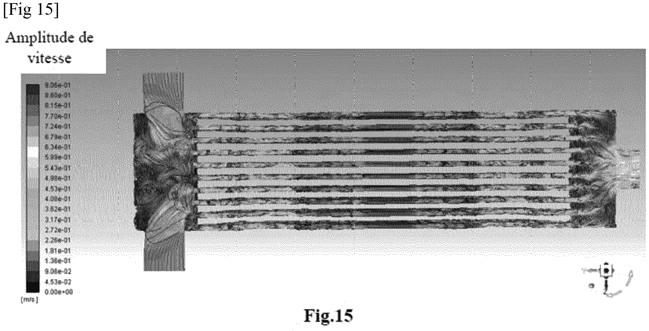

Les figures 14 et 15 illustrent l'écoulement dans les pré-collecteurs à plots pour les empilements respectivement d'un nombre de neuf plaques 20 de circulation de N2 et de dix plaques 10 de circulation de Na. Les modules 1 avec de tels pré-collecteurs présentent respectivement une maldistribution de 4,0% (N2) et 4,7% (Na).

D'autres variantes et améliorations peuvent être envisagées sans pour autant sortir du cadre de l'invention.

Les géométries des plots et la périodicité du pas du motif rectangulaire, carré ou triangulaire de leur répartition est à déterminer en fonction de l'application selon les règles de dimensionnement usuelles, de tenue mécanique aux pressions, de pertes de charges et de distribution de débit de fluides dans les canaux.

Si dans l'ensemble des exemples illustrés, toutes les plaques 10 et 20 sont réalisées avec des pré-collecteurs à plots 14, 24, on peut envisager de réaliser que celles d'un seul circuit de fluides, l'autre pouvant comprendre des pré-collecteurs classiques.

On peut envisager d'autres formes que des plots 14, 24 cylindriques. Par exemple, on peut envisager des géométries elliptiques, en forme de gouttes d'eau...

On peut envisager de mixer les deux alternatives, c'est-à-dire avec des plaques d'un circuit, par exemple celles référencées 10 avec des plots pleins, et les plaques de l'autre circuit, par exemple référencées 20 avec des plots percés débouchant.

Par ailleurs, si dans les exemples illustrés, les canaux de la zone d'échange thermique (Z_{E}) : sont des canaux droits, le pré-collecteur selon l'invention est indépendant de cette géométrie et on peut donc envisager d'autres géométrie pour les canaux d'échange (Z_{E}), par exemple des canaux de forme incurvée, en zig-zag, en double zig-zag...Et quelle que soit la géométrie retenue, au final, la profondeur des canaux d'échange détermine la hauteur des plots du pré-collecteur selon l'invention.

### Liste des références citées

[1] : D. Plancq et al. "Status of the astrid gas power conversion system option"; HAL Id: cea-02338590; https://hal-cea.archives-ouvertes.fr/cea-02338590, 21 février 2020.

## Revendications

1. Module (1, 1') d'échangeur de chaleur à au moins deux circuits de fluides, d'axe longitudinal (X) comprenant un empilement de plaques (10, 20 ; 10', 20') définissant au moins deux circuits de fluide, au moins une partie des plaques comprenant chacune des canaux de circulation de fluide, les canaux d'au moins l'un des deux circuits, dit premier circuit, présentant:
- au moins une zone d'alimentation et de distribution (Z_{H}) du fluide depuis l'extérieur de l'empilement, formant un pré-collecteur du fluide, dans laquelle les canaux (13) sont délimités par des plots (14, 14') répartis sur la surface de plaque;
- une zone d'échange (Z_{E}) continue avec le pré-collecteur dans laquelle les canaux sont délimités chacun par une rainure (15) séparés entre eux par une nervure (16) et s'étendent le long de l'axe longitudinal (X),
les canaux de l'autre des deux circuits, dit deuxième circuit, présentant :
- au moins une zone d'alimentation et de distribution (Z_{H}) du fluide depuis l'extérieur de l'empilement, formant un pré-collecteur du fluide, dans laquelle les canaux (23) sont délimités par des plots (24, 24') répartis sur la surface de plaque;
- une zone d'échange (ZE) continue avec le pré-collecteur dans laquelle les canaux sont délimités chacun par une rainure (25), séparés entre eux par une nervure (26) et s'étendent le long de l'axe longitudinal (X).

2. Module d'échangeur de chaleur selon la revendication 1, comprenant deux pré-collecteurs du premier circuit, agencés chacun à l'une des extrémités longitudinales de l'empilement, l'un des deux pré-collecteurs formant un pré-collecteur d'entrée de fluide, l'autre formant un pré-collecteur de sortie du fluide.

3. Module d'échangeur de chaleur selon la revendication 1 ou 2, comprenant deux pré-collecteurs du deuxième circuit, agencés chacun à l'une des extrémités longitudinales de l'empilement, l'un des deux pré-collecteurs formant un pré-collecteur d'entrée de fluide, l'autre formant un pré-collecteur de sortie du fluide.

4. Module d'échangeur de chaleur selon l'une des revendications 1 à 3, les plots (14, 24) du premier circuit et/ou du deuxième circuit étant pleins.

5. Module d'échangeur de chaleur selon l'une des revendications 1 à 3, les plots (14', 24') du premier circuit et/ou du deuxième circuit étant percés et débouchants de sorte à permettre la communication entre canaux des plaques de la zone d'alimentation et de distribution du premier ou du deuxième circuit mais pas avec ceux des plaques du deuxième ou respectivement du premier circuit.

6. Module d'échangeur selon l'une des revendications précédentes, comprenant au moins à l'une des extrémités longitudinales de l'empilement, un collecteur de fluide (11, 12) débouchant sur une embase latérale de l'empilement sur laquelle les canaux du pré-collecteur du premier circuit débouchent mais pas ceux du pré-collecteur du deuxième circuit, et comprenant de préférence à l'une des extrémités longitudinales, un collecteur de fluide formant le collecteur d'entrée (11) du premier circuit et à l'autre des extrémités longitudinales, un collecteur de fluide formant le collecteur de sortie (12) du premier circuit.

7. Module d'échangeur selon l'une des revendications précédentes, comprenant au moins sur un côté latéral de l'empilement, un collecteur de fluide (21, 22) traversant l'empilement transversalement à l'axe (X) et débouchant sur les canaux du pré-collecteur du deuxième circuit mais pas sur ceux du premier circuit, et comprenant de préférence au moins sur un même côté latéral de l'empilement, un collecteur de fluide formant le collecteur d'entrée (21) du deuxième circuit et un collecteur de fluide formant le collecteur de sortie (22) du deuxième circuit.

8. Module d'échangeur selon l'une des revendications précédentes, les plots étant uniformément répartis en quinconce sur la surface de plaque du pré-collecteur selon un motif triangulaire ou les plots étant uniformément répartis sur la surface de plaque du pré-collecteur selon un motif rectangulaire ou carré.

9. Module d'échangeur selon l'une des revendications précédentes, les plots étant de forme générale cylindrique.

10. Module d'échangeur selon l'une des revendications précédentes les canaux (15, 25) de la zone d'échange du premier circuit et du deuxième circuit étant droits, parallèles entre eux et qui s'étendent parallèlement à l'axe longitudinal (X).

11. Module d'échangeur de chaleur selon l'une des revendications précédentes, l'empilement étant constitué de plaques métalliques assemblées entre elles soit par compression isostatique à chaud (CIC), soit par compression uniaxiale à chaud (CUC) de sorte à obtenir un soudage par diffusion entre les plaques métalliques, soit par brasage, soit réalisé par fabrication additive.

12. Module d'échangeur selon l'une des revendications précédentes, dans lequel une plaque du premier circuit est intercalée entre deux plaques du deuxième de circuit au moins dans la partie centrale de l'empilement.

13. Echangeur de chaleur, comprenant une pluralité de modules d'échangeur (1.1, 1.2, 1.3) de chaleur selon l'une des revendications précédentes.

14. Echangeur de chaleur selon la revendication 16, dans lequel les modules selon les revendications 7 et 9 sont agencés côte-à-côte avec les collecteurs d'entrée et de sortie du deuxième circuit traversant et reliant les modules entre eux latéralement,
le fluide du premier circuit, en tant que fluide primaire étant de préférence un métal liquide de préférence du sodium liquide et le fluide du deuxième circuit, en tant que fluide secondaire, étant de préférence un gaz ou un mélange de gaz, de préférence comprenant principalement de l'azote..,
le fluide du premier ou du deuxième circuit provenant de préférence d'un réacteur nucléaire.

15. Installation nucléaire comprenant un réacteur nucléaire à neutrons rapides refroidi avec du métal liquide, notamment du sodium liquide dit RNR-Na ou SFR et un échangeur de chaleur comprenant une pluralité de modules d'échangeur selon l'une des revendications 1 à 12.
